# EUROPEAN PATENT APPLICATION

(11) **EP 1 961 308 A1**
(43) Date of publication of application: **27.08.2008**
(21) Application number: 07102835.1
(22) Date of filing: 21.02.2007
(51) Int. Cl.: A23G 9/38, A23G 9/48, A23G 9/32, A23G 9/40, A23G 9/52

(54) **Nutritionally balanced frozen dessert**

(71) Applicant: Nestec S.A., 1800 Vevey (CH)
(72) Inventor: Schmitt, Christophe, CH-Servion (CH); Bovetto, Lionel Jean René, F-74500 Larringes (FR); Panyam, Dinakar, Fremont, CA 94536 (US)
(74) Representative: Elleby, Gudrun

(57) **Abstract**

The present invention relates to frozen confectionery products which are nutritionally balanced and which have a high protein content.

## Description

### Field of the invention

The present invention relates to frozen confectionery products which are nutritionally balanced and which have a high protein content.

### Background of the invention

In order to provide consumers with healthy frozen confections, many different solutions have to date been suggested. These include providing reduced fat frozen confectionery, reducing the amount of carbohydrates present in traditional frozen confections, reducing the presence of additives etc.

For instance US 5,308,628 relates to a method for preparing yogurt based frozen dairy products which are thickener-free.

US 4,853,246 describes dairy products which can be frozen and which have a reduced lactose and fat content.

WO 01/64065 further provides frozen confectionery compositions which are ideally suited for diets as they are hypocaloric and comprise a high amount of proteins.

Often however, these solutions do not yield nutritionally balanced frozen confectionery, as one of protein, carbohydrate or fat is not present in adequate amounts or is present in excessive amounts. Indeed, the present solutions often compensate the lack of one nutrient (e.g. fat) with an excess of another (e.g. carbohydrates).

In an attempt to provide a confection having an improved nutritional balance, EP 1 676 486 teaches the use of carbohydrates in a range of 55-75% of the total energy content, protein in the range of 10-15% of the total energy content, and fat in the range of 15-40% of the total energy content and wherein less than 15% of the total energy content is provided by saturated fatty acids. However, the amount of protein present is still quite low and the amount of carbohydrate quite high.

The protein content of ice cream can be enhanced by selecting a variety of commercially available protein-rich dairy ingredients. However, this solution has its limits and increasing the amount of proteins used in frozen confectionery is often associated with a number of problems during thermal processing of ice cream mixes. For example, high protein content can induce viscosity increase, destabilisation and gelation which lead to undesirable texture and decreased stability of the final frozen confectionery product.

### Object of the invention

In view of the above, there remains a need for frozen confectionery products which are nutritionally balanced and thus have a higher protein content than traditional products.

### Summary of the invention

Accordingly, this is achieved by the features of the independent claims. The dependent claims further develop the central idea of the invention.

Thus, in a first aspect, the present invention relates to a frozen confectionery which it comprises whey protein inclusions, 20-30% of the total energy can be provided by protein, 35-45% of the total energy by carbohydrates and 30-40% of the total energy by fat.

In a second aspect, the present invention also relates to a frozen confectionery comprising whey protein inclusions. The whey protein inclusions may comprise at least 30% whey protein.

A further aspect relates to an individual portion of such a frozen confectionery. Said portion weighs 40-100g, preferably 60-90g, more preferably 70-80g.

The use of whey protein inclusions comprising at least 30% whey protein in the manufacture of frozen confectionery is also proposed by the present invention.

Finally, a method for enhancing the protein level of frozen confectionery comprising the step of adding whey protein inclusions comprising at least 30% whey protein to the frozen confectionery mix and a method for the manufacture of a frozen confectionery comprising:
a. Blending a mix of ingredients
b. Pasteurising the mix
c. Optionally, homogenising the mix
d. During the freezing step, adding whey protein inclusions comprising at least 30% whey protein,
also from part of the present invention.

### Detailed description of the invention

In the following, unless otherwise stated, percentages are to be understood as percentages by weight.

The present invention relates to frozen confectionery comprising whey protein inclusions. By "frozen confectionery" is to be understood any frozen dessert such as ice-cream, frozen yogurt, mellorine, sorbet, water ice etc. Preferably, the frozen confectionery of the present invention is dairy-based.

By "inclusions" is meant discrete particles which are dispersed in the product, are detectable upon consumption of the product and which provide the frozen confectionery with a texture contrast.

The inclusions used in the present frozen confectionery may comprise whey protein in an amount of at least 30%, preferably between 40-70%. Suited inclusions are commercially available under the trademark WPCrisps®. Alternatively, they may be produced by a process described in US 6,607,777 B1 for instance, according to which a mixture of whey protein and a carbohydrate carrier or excipient are co-extruded to form discrete pieces. Accordingly, the whey protein inclusions used in the product of the invention preferably comprise a carrier for the whey protein. More preferably, the carrier is maltodextrin.

In a first aspect of the invention, the frozen confectionery comprises said whey protein inclusions and has 20-30% of the total energy provided by protein, 35-45% of the total energy provided by carbohydrate and 30-40% of the total energy provided by fat. This energy profile constitutes an improvement over prior art products as it provides a balanced amount of the three energy sources. Furthermore, it provides an analogous energy distribution as that found in highly nutritional natural products such as cow's milk for example. Indeed commercially available milk comprises a varying amount of fat e.g. from 0% to about 4%, about 3.4% protein and about 4.8% carbohydrate.

The energy content of the product of the invention is preferably between 160-180 kcal per 100g of product.

The amount of whey protein inclusions to be added can be easily determined by the skilled person, by taking into consideration the contribution of other standard ingredients present in the recipe. For instance, in order to reach a target protein content of the final product, a low protein level in the base mix recipe would require a higher amount of protein-rich inclusions. Thus, the discrete pieces of whey protein are typically included in the product of the invention in an amount of 2-12%, preferably 3-10%, more preferably 5-10%. The amount of whey protein in the inclusions themselves (e.g. 30% to 70%) can also be chosen accordingly. This allows to enrich the dairy protein content of frozen confectionery while providing a texture contrast which is appealing to consumers.

In fact, the inclusions may assume any shape or form. When used in the products of the present invention, these are preferably in the size range of 1-25mm. These inclusions have acceptable bland taste and flavour and can be added to the frozen confectionery without impacting negatively the sensory profile of the frozen product to which it is added.

In a further embodiment, the inclusions may be coated, sweetened, flavoured and/or coloured to further improve their visual aspect and/or their taste. This may be achieved by standard methods known to a person of skill in the art. In a preferred embodiment, the whey protein inclusions are coated with a chocolate-based coating. This provides the advantage that moisture sensitivity of the whey protein inclusions is reduced, while increasing the protein content of the frozen product even further since, additionally to the whey protein itself, the chocolate-based coating also contains a source of protein.

Thus, the taste, the textural and visual aspect and the protein content of the final product may be optimised by the presence of such inclusions.

The frozen confectionery product of the invention comprising such inclusions is further characterised in that the protein content is at least 8%, preferably 8-12% by weight, most preferably approximately 10%. The carbohydrate content is preferably 15-28%, more preferably 15-20%, most preferably approximately 17% and the fat content is preferably 3-9%, preferably 5-8%, most preferably approximately 6.5%. Such a high protein amount is unusual in frozen confectionery products without compromising the textural and organoleptic properties of the product.

The protein content is provided by the standard protein containing ingredients used in ice cream manufacture, such as e.g. skim milk powder, whey protein concentrates or isolates, micellar caseins, total milk solids, milk protein isolates etc. as well as the whey protein inclusions. The use of the whey protein inclusions to achieve the high protein content presents the advantage that problems normally encountered in the processing of ice-cream mixes are now overcome since the inclusions may be added after thermal processing has occurred. In the method of the invention, the whey protein inclusions are added during the last freezing stage of the ice cream making process. Thus, high protein content can be easily achieved without complications during processing.

The source of carbohydrate in the present invention may be provided principally by mono and disaccharides such as by lactose, sucrose, glucose, maltose etc. Typically the lactose contribution to the total carbohydrate content is lower than that of sucrose or glucose. This presents the advantage that the present frozen product is suitable for consumption by lactose-intolerant individuals.

The source of fat in the present invention is typically provided by milk fat, although vegetable fats may also be used.

The present frozen confection presents the advantage that not only the organoleptic properties of said confection are improved by having inclusions which provide flavour and texture contrast but also that high protein amounts may be achieved without compromising the organoleptic properties (texture or strong protein taste etc.)

The present product may further comprise minerals and vitamins in order to enhance the nutritional quality of said product. In particular, it may further comprise calcium in an amount between 0.3-0.4%. The source of calcium may be provided by traditional ingredients used in the manufacture of frozen products which naturally comprise high amounts of calcium, such as, for example, micellar caseins, total milk solids etc. Alternatively or in addition, calcium may be provided by calcium citrate or soluble calcium glycerophosphate. The presence of calcium further reinforces the healthy nutritional properties of the frozen confectionery product of the invention.

From a nutritional point of view, the present invention also provides advantages due to the use of whey protein, which has a desirable amino acid profile. The consumption of the product of the invention indeed contributes to individuals' daily needs of essential amino acids.

Under another aspect of the invention, an individual portion of the frozen confectionery is characterised in that said portion weighs 40-100g, preferably 60-90g, more preferably 70-80g. Referring to tables 1 and 2 below, this individual portion presents the advantage that it has an equivalent caloric profile to a glass of milk, in particular to a glass of cow's milk (2% fat, 244mL).

**Table 1, comparison of the nutritional composition of milk and of a product according to the present invention.**

| | **Milk* (244mL)** | **Product of the invention (75g)** |
|---|---|---|
| Protein (g) | 8.05 | 8.009 |
| Total lipids (fat) (g) | 4.81 | 4.8 |
| Carbohydrate (g) | 12.35 | 12.836 |

| | | |
|---|---|---|
| ** NDB No 01079, USDA database, accessed August 2006* | | |

**Table 2, comparison of the energy content and distribution of milk and of a product according to the present invention**

| | **Milk* (244mL)** | **Product of the invention (75g)** |
|---|---|---|
| Protein: kcal | 32 | 32.2 |
| % | 26 | 25.5 |
| Carbohydrate: kcal | 49 | 51.2 |
| % | 40 | 40.4 |
| Lipids (fat): kcal | 43 | 43.2 |
| % | 35 | 34.1 |
| Total: kcal/kJ | 122/508 | 127/534 |
| % | 100 | 100 |

| | | |
|---|---|---|
| - ** NDB No 01079, USDA database, accessed August 2006* | | |

Furthermore, if calcium is present in the frozen confectionery in an amount of 0.1-0.5%, preferably 0.3-0.4%, the concentration of calcium present in the portion of frozen confectionery mimics, upon consumption, the intake of calcium from a glass of milk. Thus, the portion can be readily consumed by children and adults alike as a healthy, nutritional snack. Nutritionally, a portion of the frozen product of the invention can contribute about 30% of a child's daily protein needs.

The individual portion may be provided in many different forms which are used in the field of frozen desserts. For example, they may be provided on a stick, in a cup, in a wafer cone, etc. They may also be dispensed from a dispenser into a container, wherein the dispenser is set to provide the desired quantity of said product.

The present invention thus provides for the use of whey protein inclusions comprising at least 30% whey protein in the manufacture of frozen confectionery, in particular in order to enhance the protein level of said frozen confectionery. Preferably, the whey protein inclusions have a protein content between 40-70% and are typically used in an amount of 2-12% of the frozen confectionery. Thus, the resulting frozen confectionery preferably has a protein content of at least 8%, a carbohydrate content of 15-28% and a fat content of 3-9%. More preferably, the frozen confectionery has a protein content of 8-12%, a carbohydrate content of 15-20%, and a fat content of 5-8%.

A method for enhancing the protein level of frozen confectionery comprising the step of adding whey protein inclusions comprising at least 30% whey protein to the frozen confectionery mix therefore also forms part of the invention.

A method for the manufacture of a frozen confectionery is also provided by the invention. A first step in the method comprises blending a mix of ingredients. The ingredients are selected from traditional ingredients used in the manufacture of ice cream mixes and may include skim milk powder, whey protein concentrate or isolates, sugars, water, fat, emulsifiers, stabilisers etc. It may also include minerals, vitamins, prebiotics, probiotics etc.

A second step in the method comprises pasteurising the mix in order to make it microbiologically acceptable and in a third step, the mix may be optionally homogenised.

Finally, the mix is frozen by standard procedures and it is during the freezing step that inclusions of whey protein comprising at least 30% whey protein are added. The inclusions are preferably added at the outlet of a primary freezer where more than 40% of the water in the mix is already frozen.

Prior to incorporation into the mix, the inclusions may be modified, for example by sweetening, flavouring, colouring, coating etc. These techniques are known to the skilled person. Preferably, the inclusions are coated with a chocolate-based coating. This not only ensures moisture resistance of the whey protein crisps but increases the taste and the protein content of the resulting product.

The inclusions can be dosed into the frozen confectionery at a pre-determined rate using standard equipment such as a fruit feeder which uses an auger to control the rate of addition to the product. This ensures uniform distribution of the protein-rich inclusions. Thus, the target protein quantity can be met. The resulting product can thus have a texture and flavour similar to traditional confectionery products without compromise arising from the addition of protein.

Using this process, the textural stability of the product during storage can also be ensured. The amount of protein-rich inclusions may also be varied to achieve a broad range of caloric profile and balance in the final product.

The present invention is further illustrated hereinafter with the following examples which are not to be considered as limiting the scope of the invention.

### Example

### Whey protein boosted ice cream with reduced fat content

### Material

Whey protein isolate (WPI, Prolacta90® from Lactalis, Rétiers, France) with a protein content of 90%.
Milk Protein Isolate (MPI, Promilk 852A from Ingredia) with a protein content of 85%.
WPCrisps® having a protein content of 70%.
Skim milk powder (SMP) with 35% protein content.
Sucrose
Glucose
Fructose
Anhydrous milk fat
Emulsifiers
Stabilizers
De-ionised water

### Method

10 kg of SMP was dispersed in a double-jacketed 150 L tank at 50°C in 65.5 kg of de-ionized water. 2 kg WPI and 3 kg MPI were added afterwards until full dispersion. Sucrose, glucose and fructose were added afterwards at a total of 17 kg. Then, 0.5 kg of a mixture of emulsifiers/stabilizers was added before finally 5 kg of melted anhydrous butter fat was added. The total solids content of the mix was finally 37.5 %. Stirring was maintained for 15 minutes, then the mix was two-step homogenised (80/20 bars) and pasteurised (86°C/30s) before ageing during overnight. The protein content of this mix was 7.85 g/100g.
After a normal aging period, the ice-cream mix was frozen using standard equipment and settings to achieve a soft ice cream with 100% overrun and >40% water frozen at a temperature of -5.5°C or lower. The protein-rich ingredients in the form of discrete pieces (approximately 5mm length and comprising of 70% protein) were filled in the hopper of a fruit-feeder. A fruit feeder is a standard piece of equipment in an ice cream manufacturing operation and is used to add dry inclusions or annexes such as chocolate or cookie pieces, nuts, dry fruit at a controlled rate into semi-frozen ice cream extruded from a standard freezer. The outlet of the fruit feeder was connected downstream to the exit of the ice cream freezer. The protein-rich pieces were transported by the fruit feeder to be mixed with the stream of fresh frozen ice cream in a continuous manner. The rate of addition of the protein-rich pieces into the ice cream was controlled by an auger rotating at an adjustable speed. This enabled the controlled addition of 4% by weight of the protein-rich pieces in the ice cream. This uniform and controlled dosing of protein-rich pieces comprising 70% protein resulted in the addition of 2.85 g of protein for every 100g of ice cream. The final protein concentration in the finished product was therefore 10.7 g per 100 gram of product.
The finished product was filled into containers, and handled in a normal way by hardening rapidly to -30°C before storage.

## Claims

1. Frozen confectionery, which comprises whey protein inclusions and wherein 20-30% of the total energy is provided by protein, 35-45% of the total energy is provided by carbohydrate and 30-40% of the total energy is provided by fat.

2. Frozen confectionery comprising whey protein inclusions,
wherein said whey protein inclusions comprise at least 30% whey protein.

3. Frozen confectionery according to any of claims 1 or 2,
wherein said whey protein inclusions comprise 40-70% whey protein.

4. Frozen confectionery according to any of the preceding claims,
wherein the whey protein inclusions comprise a carrier for the whey protein.

5. Frozen confectionery according to claim 4,
wherein the carrier is maltodextrin.

6. Frozen confectionery according to any of the preceding claims,
wherein the whey protein inclusions are present in the frozen confectionery in an amount of 2-12% by weight.

7. Frozen confectionery according to any of the preceding claims,
having an overall protein content greater than 8% by weight.

8. Frozen confectionery according to claim 7,
wherein the overall protein content is between 8 and 12% by weight.

9. Frozen confectionery according to any of the preceding claims,
having a carbohydrate content between 15-28% by weight.

10. Frozen confectionery according to claim 9,
wherein the carbohydrate content is between 15-20% by weight.

11. Frozen confectionery according to any of the preceding claims,
having a fat content between 3-9% by weight.

12. Frozen confectionery according to claim 11,
wherein the fat content is between 5-8% by weight.

13. Frozen confectionery according to any of the preceding claims,
wherein the whey protein inclusions are coated, sweetened, flavoured and/or coloured.

14. Frozen confectionery according to claim 13,
wherein the coating is a chocolate-based coating.

15. Frozen confectionery according to any of the preceding claims,
wherein the whey protein inclusions have a size of 1mm to 25mm.

16. Frozen confectionery according to any of the preceding claims,
which comprises between 0.1-0.5%, preferably 0.3-0.4% of calcium.

17. An individual portion of the frozen confectionery according to any of the preceding claims,
wherein said portion weighs 40-100g, preferably 60-90g, more preferably 70-80g.

18. Portion of the frozen confectionery according to any of claims 1 to 16,
having the same caloric profile as a glass of cow's milk.

19. Use of whey protein inclusions comprising at least 30% whey protein in the manufacture of frozen confectionery.

20. Use according to claim 19,
wherein said inclusions comprise between 40-70% whey protein.

21. Use according to any of claims 19 or 20,
wherein the frozen confectionery has a protein content of at least 8% by weight, a carbohydrate content of 15-28% by weight and a fat content of 3-9% by weight.

22. Use according to claim 21,
wherein the frozen confectionery has a protein content of between 8-12% by weight, a carbohydrate content of 15-20% by weight and a fat content of 5-8% by weight.

23. Method for the manufacture of a frozen confectionery comprising:
a. Blending a mix of ingredients
b. Pasteurising the mix
c. Optionally, homogenising the mix
d. During the freezing step, adding whey protein inclusions comprising at least 30% whey protein.

24. Method for enhancing the protein level of frozen confectionery comprising the step of adding whey protein inclusions comprising at least 30% whey protein to the frozen confectionery mix.

25. Method according to any of claims 23 or 24,
wherein the inclusions comprise between 40-70% whey protein.

26. Method according to any of claims 23 to 25,
wherein the inclusions are modified prior to incorporation in the mix.

27. Method according to claim 26,
wherein the inclusions are modified by sweetening, flavouring, colouring, coating.

28. Method according to any of claims 26 or 27,
wherein the inclusions are coated with a chocolate coating.

29. Method according to any of claims 23 to 28,
wherein the inclusions are added at the outlet of a primary freezer where more than 40% of the water in the mix is frozen.
